# EUROPÄISCHE PATENTANMELDUNG

(11) **EP 4 753 060 A1**
(43) Veröffentlichungstag der Anmeldung: **03.06.2026**
(21) Anmeldenummer: 25216708.5
(22) Anmeldetag: 18.11.2025
(51) Int. Cl.: H01M 50/502, H01M 50/298, H01M 50/289, H01M 50/284, H01M 50/204, H01M 10/42

(54) **BATTERIEMODULANORDNUNG UND MONTAGEVERFAHREN FÜR EINE BATTERIEMODULANORDNUNG**

(30) Priorität: 28.11.2024 DE 102024135138
(71) Anmelder: DEUTZ Aktiengesellschaft, 51149 Köln (DE)
(72) Erfinder: Hoffmann, Oliver Günther, 53501 Grafschaft (DE); Sachser, Michael, 42929 Wermelskirchen (DE)

(57) **Zusammenfassung**

Die Erfindung betrifft eine Batteriemodulanordnung mit
- einem ersten Batteriemodul 2 und einem zweiten Batteriemodul 3, die jeweils ein oder mehrere Batteriezellen umfassen,
- einer Batterieüberwachungseinheit 4,
- einem Halteelement 6 mit einer Aufnahme 7, in der die Batterieüberwachungseinheit 4 angeordnet ist,
- wobei das Halteelement 6 zwischen dem ersten Batteriemodul 2 und dem zweiten Batteriemodul 3 angeordnet ist,
- einer an dem Halteelement 6 formschlüssig abgestützten Verkabelungsplatte 8 mit Führungen 9 zum Halten von Kabeln 10 einer Niedervoltverkabelung 11 für die Batterieüberwachungseinheit 4.

## Beschreibung

Die Erfindung betrifft eine Batteriemodulanordnung mit einer Batterieüberwachungseinheit und ein Montageverfahren für eine Batteriemodulanordnung.

Batteriemodulanordnungen der eingangs genannten Art werden dazu eingesetzt, um die elektrische Energie mehrerer Batteriemodule zu bündeln. Hierzu können zumindest zwei Batteriemodule in einem Gehäuse angeordnet sein. In dem Gehäuse können auch weitere Komponenten, wie beispielsweise Kabelbäume oder Batterieüberwachungselektronik untergebracht sein.

Die DE 11 2020 000 386 T5 zeigt beispielsweise eine elektrische Batterie mit mehreren Stromspeicherzellen, die innerhalb eines abgedichteten Raums angeordnet sind. Der abgedichtete Raum ist mit einem dielektrischen Fluid gefüllt. Die Batterie weist mindestens eine aus Kunststoff mit geringer Dichte hergestellte Fluidführung auf, die innerhalb des abgedichteten Raums angeordnet ist und mindestens einen Strömungskanal für das mit den Stromspeicherzellen in Kontakt stehende dielektrische Fluid definiert.

Der vorliegenden Erfindung liegt die Aufgabe zugrunde, eine Batteriemodulanordnung und ein Montageverfahren für eine Batteriemodulanordnung bereitzustellen, die eine einfache und schnelle Montage ermöglichen.

Die Aufgabe wird gelöst durch eine Batteriemodulanordnung mit einem ersten Batteriemodul und einem zweiten Batteriemodul, die jeweils ein oder mehrere Batteriezellen umfassen. Die Batteriemodulanordnung weist erfindungsgemäß eine Batterieüberwachungseinheit und ein Halteelement mit einer Aufnahme auf, in der die Batterieüberwachungseinheit, insbesondere eine Platine der Batterieüberwachungseinheit, angeordnet ist. Erfindungsgemäß ist das Halteelement zwischen dem ersten Batteriemodul und dem zweiten Batteriemodul angeordnet und eine Verkabelungsplatte mit Führungen zum Halten von Kabeln einer Niedervoltverkabelung für die Batterieüberwachungseinheit ist formschlüssig an dem Halteelement abgestützt.

Durch den Einsatz einer formschlüssig auf dem Halteelement abgestützten Verkabelungsplatte mit Führungen zum Halten der Kabel der Niedervoltverkabelung kann beispielsweise auf Klebesockel, die mit einer vorhergehenden aufwändigen Reinigung auf dem Halteelement und/oder den Batteriemodulen befestigt werden müssen, verzichtet werden. Die Verkabelungsplatte kann an die Batteriemodule angepasst hergestellt werden, sodass die Führungen optimal zum Führen der Kabel der Niedervoltverkabelung an der Verkabelungsplatte ausgebildet sind. Das formschlüssige Abstützen der Verkabelungsplatte auf dem Halteelement ermöglicht eine schnelle und dennoch zuverlässige Montage, da insbesondere das zeitaufwändige Reinigen zum Aufkleben von Klebesockeln oder dergleichen entfällt. Zudem kann die Verkabelungsplatte hierdurch schnell und einfach an dem Halteelement und/oder den Batteriemodulen angeordnet werden.

Die Batteriemodulanordnung bezeichnet eine Baugruppe mit zumindest einem ersten und einem zweiten Batteriemodul. Unter einem Batteriemodul wird in diesem Zusammenhang eine strukturelle Einheit verstanden, die eine oder gegebenenfalls mehrere in Serie oder parallel geschaltete Batteriezellen aufweist. Neben den Batteriezellen kann ein Batteriemodul auch elektrische Verbindungen, Kühlkomponenten oder Mechaniken zur Batteriezellenbefestigung aufweisen.

Ein Batteriemodul kann eine im Wesentlichen quaderförmige Grundform aufweisen, d.h., dass die Grundform auch geringfügige Abweichungen, beispielsweise Aussparungen oder Erhebungen an Kanten, Ecken oder Seitenflächen aufweisen kann. Weiter kann ein Batteriemodul zwei im Abstand voneinander angeordnete Längsseiten aufweisen. Eine quer zu den Längsseiten, insbesondere senkrecht zu den Längsseiten angeordnete Oberseite kann im Abstand zu einer Unterseite angeordnet sein. Die Unterseite kann quer zu den Längsseiten und/oder parallel zu der Oberseite angeordnet sein. Darüber hinaus kann das Batteriemodul eine quer, insbesondere senkrecht zu den Längsseiten, der Oberseite und/oder der Unterseite angeordnete Querseite aufweisen. Das Batteriemodul kann auch zwei im Abstand voneinander angeordnete Querseiten aufweisen.

Die Batterieüberwachungseinheit kann eine Platine aufweisen, die in der Aufnahme des Halteelements angeordnet ist. An der Platine können ein oder mehrere elektronische Bauteile, beispielsweise Anschlüsse für Stecker der Niedervoltverkabelung, angeordnet sein. Die Batterieüberwachungseinheit kann mit mehreren Sensoren, zum Beispiel Sensoren zur Überwachung der Temperatur, Sensoren zur Überwachung der Spannung und/oder Sensoren zur Überwachung anderer Parameter verbunden sein. Die Sensoren können jeweils an den Batteriemodulen angeordnet sein und mit der Platine verbunden sein.

Das Halteelement, die Verkabelungsplatte und/oder ein mögliches Seitenelement können jeweils flache Bauteile bezeichnen, d.h. dass ein solches Bauteil eine Länge und Breite aufweist, die eine Erstreckung jeweils in Längen- und Breitenrichtung aufweisen, die einem Vielfachen der Dicke des Bauteils entspricht. In diesem Zusammenhang kann unter der Längsrichtung eine Richtung entlang der Länge des Bauteils, also in Richtung entlang einer Längsachse des Bauteils und unter der Breitenrichtung eine Richtung entlang der Breite des Bauteils verstanden werden. Eine Querrichtung des Bauteils beschreibt eine Richtung entlang einer Dicke des Bauteils.

Das Halteelement kann zwischen einer Längsseite des ersten Batteriemoduls und einer Längsseite des zweiten Batteriemoduls angeordnet sein. Die Batteriemodule können derart zueinander angeordnet sein, dass zwischen den Batteriemodulen ein Spalt ausgebildet ist. Der Spalt kann zwischen zwei einander zugewandten Längsseiten der Batteriemodule ausgebildet sein. Das Halteelement kann zwischen den Batteriemodulen, insbesondere in dem zwischen den Längsseiten der Batteriemodule ausgebildeten Spalt angeordnet sein. Das Halteelement kann eine Aussparung als Aufnahme aufweisen, in die die Platine eingesetzt ist. Die Platine kann in einer Richtung vom ersten Batteriemodul hin zu dem zweiten Batteriemodul und/oder umgekehrt überstandsfrei in der Aussparung angeordnet sein, damit das Halteelement vormontierbar in dem Spalt zwischen den Batteriemodulen einsetzbar ist.

Die Platine kann form- und/oder kraftschlüssig in der Aufnahme, insbesondere der Aussparung festgelegt sein. Insbesondere kann die Platine ein oder mehrere, beispielsweise zwei, seitlich vorstehende Vorsprünge aufweisen. Die Aussparung des Halteelements kann seitliche Vertiefungen für die Vorsprünge aufweisen. Die Vorsprünge und/oder die Aussparungen können derart ausgebildet sein, dass ein Formschluss zwischen der Platine der Batterieüberwachungseinheit und dem Halteelement in Längsrichtung und/oder in Breitenrichtung des Halteelements ausgebildet ist. Die Länge und die Breite können jeweils Seitenflächen des Halteelements definieren. Die Dicke des Halteelements kann durch den Abstand zwischen den Seitenflächen des Halteelements definiert sein.

Alternativ oder zusätzlichen kann die Platine mit einem oder mehreren Befestigungselementen an dem Halteelement befestigt sein. Die Vorsprünge können Öffnungen zum Durchführen der Befestigungselemente aufweisen. Das Befestigungselement kann als Spreizdübel mit einem federnden Spreizabschnitt ausgebildet sein. Der Spreizabschnitt kann in einer Bohrung des Halteelements, insbesondere an der Vertiefung angeordnet sein.

Die Verkabelungsplatte kann auf einer quer zu den Längsseiten verlaufenden Oberseite zumindest eines der Batteriemodule angeordnet sein. Insbesondere kann die Verkabelungsplatte auf den Oberseiten beider Batteriemodule angeordnet sein. Weiter ist die Verkabelungsplatte formschlüssig an dem Halteelement abgestützt. Insbesondere kann die Verkabelungsplatte derart formschlüssig an dem Halteelement abgestützt sein, dass ein Formschluss in Längsrichtung, also auch in Richtung einer Längsachse der Verkabelungsplatte, und/oder in Breitenrichtung ausgebildet ist.

Die Verkabelungsplatte weist mehrere Führungen zum Halten von Kabeln der Niedervoltverkabelung auf. Die Führungen können derart an der Verkabelungsplatte angeordnet sein, dass die Batterieüberwachungseinheit und/oder die Batteriemodule mit den Kabeln der Niedervoltverkabelung für die Batterieüberwachungseinheit verbunden sind. Die Führungen sind derart ausgebildet, dass die Kabel der Niedervoltverkabelung lösbar festgelegt sind. Insbesondere können die Führungen derart ausgebildet sein, dass die Kabel formschlüssig festgehalten werden. Zwischen den Führungen und den Kabeln kann ein Formschluss in Querrichtung der Verkabelungsplatte ausgebildet sein. Unter der Niedervoltverkabelung wird ein Verkabelungssystem für Spannungen unterhalb des Bereichs des Standard-Netzspannung von 230 V, beispielsweise Spannungen mit einem Wert zwischen 5 und 50 V oder 5 und 25 V, verstanden. Die Kabel können einen Kabelbaum der Niedervoltverkabelung ausbilden.

Nach einer möglichen Ausgestaltung kann das Halteelement an einer der Verkabelungsplatte zugewandten Oberseite einen Absatz zum formschlüssigen Abstützen der Verkabelungsplatte auf dem Halteelement aufweisen. Der Absatz kann in Richtung der Breitenrichtung des Halteelements von der Oberseite vorstehen. Die Verkabelungsplatte kann eine Ausnehmung zum Anordnen des Absatzes aufweisen. Der Absatz des Halteelements und/oder die Ausnehmung der Verkabelungsplatte können derart ausgebildet sein, dass der Absatz in Längsrichtung des Halteelement seitlich in der Ausnehmung abgestützt ist. Insbesondere kann der Absatz derart in der Ausnehmung angeordnet sein, dass zumindest ein Formschluss in Querrichtung der Verkabelungsplatte ausgebildet ist. Der Absatz und/oder die Ausnehmung können jeweils quer zu der Längsachse der Verkabelungsplatte einen polygonförmigen, zum Beispiel viereckigen Querschnitt aufweisen. Das Halteelement kann einstückig hergestellt worden sein, sodass der Absatz einstückig an der Oberseite des Halteelements ausgebildet ist. Der Absatz an der Oberseite des Halteelements ermöglicht auf einfache und kompakte Weise das formschlüssige Abstützen der Verkabelungsplatte an dem Halteelement.

Gemäß einer möglichen Weiterbildung kann die Verkabelungsplatte mindestens ein seitliches Abstützelement zum Abstützen auf zumindest einem Batteriemodul, insbesondere den beiden Batteriemodulen aufweisen. In diesem Zusammenhang kann unter seitlich verstanden werden, dass das Abstützelement an einer Seitenfläche der Verkabelungsplatte angeordnet ist. Die Seitenflächen der Verkabelungsplatte können in Breitenrichtung der Verkabelungsplatte im Abstand voneinander angeordnet sein. Das Abstützelement kann einstückig an der Verkabelungsplatte ausgebildet sein. Darüber hinaus kann das Abstützelement in Richtung entlang der Längsachse des Halteelements an einer ersten Seitenfläche der Seitenflächen ausgebildet sein.

In Draufsicht auf die Verkabelungsplatte kann das Abstützelement zu der Längsachse des Halteelements achsensymmetrisch ausgebildet sein. Beispielweise kann das Abstützelement einen von der ersten Seitenfläche in Richtung entlang der Längsachse des Halteelements und/oder in Breitenrichtung der Verkabelungsplatte vorstehenden Steg aufweisen. Zusätzlich kann das Abstützelement zwei quer zu der Längsachse des Halteelements von dem Steg seitlich vorstehende Abstützabschnitte aufweisen. Das Abstützelement, insbesondere der Steg und die Abstützabschnitte können die gleiche Dicke wie die restliche Verkabelungsplatte aufweisen. Fernen können auch mehrere Abstützelemente vorgesehen sein. Beispielsweise kann ein weiteres Abstützelement auf einer der ersten Seitenfläche gegenüberliegenden zweiten Seitenfläche angeordnet sein. Die Abstützelemente können unterschiedlich, aber gegebenenfalls auch identisch ausgebildet sein. Das oder die zusätzlichen Abstützelemente können die Verkabelungsplatte zusätzlich gegen ein unerwünschtes Verstellen oder Verschieben in die Längs- und/oder Breitenrichtung der Verkabelungsplatte absichern und den Halt der Verkabelungsplatte durch das zusätzliche Abstützen auf den Batteriemodulen weiter verbessern.

Nach einer möglichen Weiterbildung können mindestens ein, insbesondere zwei Seitenelemente an einer quer zu den Längsseiten und der Oberseite verlaufenden Querseite zumindest eines der Batteriemodule angeordnet sein. Das mindestens eine Seitenelement kann formschlüssig gegen das Halteelement abgestützt sein. Das Halteelement kann zum Bilden eines H-Profils an zwei Seitenelementen seitlich abgestützt sein. Die Seitenelemente können jeweils einen Kopplungsabschnitt zum formschlüssigen Verbinden mit Formschlussabschnitten des Halteelements aufweisen. Die Seitenelemente und das Halteelement können in Draufsicht auf die Verkabelungsplatte und/oder in Querrichtung des Halteelements ein H-Profil ausbilden.

Ein Seitenelement kann als längliches Bauteil ausgebildet sein. Weiter können die Seitenelemente sich in Längen über mindestens 50 %, mindestens 75 % oder die gesamte Länge der Verkabelungsplatte erstrecken. Die Seitenelemente könne insbesondere identisch ausgebildet sein. Ferner können die Seitenelemente in Draufsicht auf die Verkabelungsplatte achsensymmetrisch zu der Längsachse der Verkabelungsplatte ausgebildet und/oder angeordnet sein. Die Kopplungsabschnitte der Seitenelemente können jeweils an einer dem Halteelement zugewandten Innenseite angeordnet sein. Das Halteelemente kann zwei jeweils einem der Seitenelemente zugeordnete Formschlussabschnitte aufweisen. Die Formschlussabschnitte können an zwei gegenüberliegenden Stirnflächen des Halteelements angeordnet sein. Die Stirnflächen bezeichnen jeweils abschließende Querschnitte des Halteelements. Vorzugsweise können die Kopplungsabschnitte jeweils im Bereich des Halteelements, insbesondere im Bereich der Längsachse des Halteelement angeordnet sein.

Die Kopplungsabschnitte und/oder die Formschlussabschnitte können derart ausgebildet sein, dass zwischen dem Halteelement und einem der Seitenelemente jeweils ein Formschluss in Richtung entlang der Längsachse der Verkabelungsplatte erzeugt ist. Die Kopplungsabschnitte und/oder die Formschlussabschnitte können jeweils zu einer senkrechte zu der Längsachse des Halteelements angeordneten Hauptachse achsensymmetrisch ausgebildet sein. Insbesondere können die Kopplungsabschnitte und/oder die Formschlussabschnitte derart ausgebildet sein, dass die Seitenelemente jeweils, bezogen auf die Gebrauchslage der Batteriemodulanordnung, von der Oberseite aus in Richtung auf eine Unterseite des Halteelements auf das Halteelement aufgeschoben sind. Hierdurch kann auch ein Formschluss zwischen dem Halteelement und den Seitenelementen in Richtung auf die Unterseite des Halteelements erzeugt werden. Zum Beispiel kann der Formschluss aus einem Kopplungsabschnitt und einem Formschlussabschnitt durch eine Feder-Nut-Verbindung erzeugt sein. Die Kopplungsabschnitte können jeweils als Feder und die Formschlussabschnitte können jeweils als Nut oder umgekehrt ausgebildet sein. Die Feder kann in diesem Fall einen von der Stirnfläche des Halteelements vorstehenden Abschnitt des Halteelements bezeichnen.

Die Seitenelemente können jeweils im Bereich der Kopplungsabschnitte eine Verstärkungsrippe aufweisen. Die Verstärkungsrippe kann in Richtung das Halteelements vorstehen. Alternativ oder zusätzlich kann die Verstärkungsrippe an den Spalt zwischen den Batteriemodulen angepasst sein. Beispielsweise weist die Verstärkungsrippe in Draufsicht auf die Verkabelungsplatte eine Länge auf, die der Dicke des Halteelements entspricht. Die Seitenelemente und die mögliche Ausgestaltung für eine formschlüssige Verbindung des Halteelements mit den Seitenelementen ermöglichen eine noch schnellere Montage der Batteriemodulanordnung. Zudem kann aufgrund der formschlüssigen Verbindung des Halteelements mit dem oder den Seitenelementen ein unerwünschtes Verschieben des Halteelements in Längsrichtung der Verkabelungsplatte auf einfache und zuverlässige Weise unterbunden werden.

Nach einer möglichen Ausgestaltung können bezogen auf die Gebrauchslage die Verkabelungsplatte auf der Oberseite des Halteelements und das Seitenelement an Querseiten, insbesondere den Stirnflächen des Halteelements angeordnet sein. In der Gebrauchslage können die Unterseite und/oder die Oberseite des Halteelements parallel zu einer Grundebene der Batteriemodulanordnung angeordnet sein. Die Verkabelungsplatte kann derart auf der Oberseite des Halteelements aufliegen, dass die Auflagefläche und/oder die Außenfläche der Verkabelungsplatte parallel zu der Grundebene angeordnet sind. Die Seitenelemente können derart an der Querseite des Halteelements angeordnet sein, dass die Innenseite und/oder die Außenseite der Seitenelemente jeweils quer, insbesondere senkrecht zu der Grundebene angeordnet sind. Das Halteelement kann in Richtung der Längsachse des Halteelements zwischen den Seitenelementen angeordnet sein. Durch die mögliche Anordnung des Halteelements, der Verkabelungsplatte und der Seitenelemente bezogen auf die Gebrauchslage der Batteriemodulanordnung kann auch bei schneller und einfacher Montage eine besonders kompakte und stabile Bauweise für die Batteriemodulanordnung ermöglicht werden.

Gemäß einer möglichen Ausgestaltung können das mindestens eine Seitenelement, insbesondere die Seitenelemente auf einer von dem Halteelement abgewandten Außenseite mindestens eine Aufnahme, insbesondere eine Nut, zum Einlegen einer Stromschiene für eine Hochvoltverbindung zwischen den Batteriemodulen aufweisen. Die Außenseite des Seitenelements kann von der Innenseite abgewandt sein. Die Aufnahme kann als Nut ausgebildet sein. Die Aufnahme kann derart an der Außenseite angeordnet oder ausgebildet sein, dass die Stromschiene von einer Oberseite und/oder einer Stirnseite, also aus Richtung einer Stirnfläche des Seitenelements, in die Aufnahme eingeschoben werden kann.

Insbesondere kann das Seitenelement an der Außenseite eine oder mehrere Rippen aufweisen, um das Seitenelement zu verstärken. Mehrere Rippen können in Richtung der Längsachse der Verstärkungsplatte und/oder in Richtung einer Längsachse des Seitenelements intervallartig im Abstand voneinander angeordnet sein. Die Aufnahme des Seitenelements kann in Draufsicht auf die Außenseite eines Seitenelements hinter dem oder den Rippenelementen ausgebildet sein. Beispielsweise ist die Aufnahme ein freier Bereich des Seitenelements zwischen der Innenseite und der Außenseite des Seitenelements, insbesondere der oder den Rippen. Die Stromschiene für die Hochvoltverbindung kann in der Aufnahme angeordnet und jeweils über Stecker mit den Batteriemodulen verbunden und zusätzlich mit den Batteriemodulen verschraubt sein. Über die Stromschiene können die Batteriemodule in Reihe miteinander verbunden sein. Die Stromschiene kann aus einem leitenden Werkstoff, beispielsweise aus einem Metall gebildet sein.

Durch die Aufnahme der Seitenelemente kann die Stromschiene für die Hochvoltverbindung einfach und zuverlässig fixiert werden. Zudem kann auf aufwendig anzubringende Klebesockel zur Fixierung der Stromschiene verzichtet werden, wodurch die Montage der Batteriemodulanordnung noch schneller durchführbar ist. Die Rippen können bei der Montage der Seitenelemente in einem Wannengehäuse der Batteriemodulanordnung zum Toleranzausgleich gestaucht werden und dienen zudem der kraftschlüssigen Befestigung der Seitenelemente in dem Wannengehäuse.

Nach einer möglichen Ausgestaltung können die Führungen der Verkabelungsplatte derart ausgebildet sein, dass die Verkabelungsplatte an einer dem Halteelement und den Batteriemodulen zugewandten Auflagefläche und einer von der Auflagefläche abgewandten Außenfläche im Wesentlichen eben ist, um eine noch kompaktere Bauweise der Batteriemodulanordnung zu ermöglichen. Die Auflagefläche und die Außenfläche sind in Querrichtung der Verkabelungsplatte im Abstand voneinander angeordnet. Der Abstand zwischen der Auflagefläche und der Außenfläche definiert die Dicke der Verkabelungsplatte. In diesem Zusammenhang wird unter im Wesentlichen eben verstanden, dass die Verkabelungsplatte zumindest entlang der Führungen keine von der Auflagefläche und/oder der Außenfläche vorstehenden Vorsprünge oder Erhebungen aufweist. Die Verkabelungsplatte kann bis auf Erhebung der Auflagefläche im Bereich des Halteelements eben ausgebildet sein. Insbesondere kann die Außenfläche der Verkabelungsplatte vollständig eben ausgebildet sein.

Vorzugsweise können die Führungen der Verkabelungsplatte jeweils als Nuten der Verkabelungsplatte ausgebildet sein. Entlang der Nuten können mehrere im Abstand voneinander angeordnete Rastelemente zum formschlüssigen Halten der Kabel angeordnet sein, die über die Nuten vorstehen. In diesem Zusammenhang wird unter einer Nut ein freier Bereich der Verkabelungsplatte verstanden, der zum Führen der Kabel durch einen Boden und zwei Seitenwände begrenzt ist. Die Nuten können zumindest abschnittsweise wellenförmig ausgebildet sein, wobei die Rastelemente insbesondere jeweils an einem Bogen der wellenförmigen Abschnitte ausgebildet sein können. Insbesondere können die Rastelemente als von den Seitenwänden der Nut vorstehende Bögen ausgebildet sein. Die Kabel können jeweils derart in die Nut eingedrückt sein, dass die Kabel die Rastelemente hintergreifen und somit einen Formschluss Breitenrichtung des Halteelements bilden. Durch die mögliche Ausgestaltung der Führungen als Nuten in Verbindung mit den Rastelementen können die Kabel der Niedervoltverkabelung einfach und auf den Anwendungsfall zugeschnitten geführt und in Position gehalten werden.

Gemäß einer möglichen Weiterbildung kann die Verkabelungsplatte mindestens eine Aussparung zur Aufnahme eines Steckers der Niedervoltverkabelung aufweisen. Vorzugsweise kann die Verkabelungsplatte drei Aussparungen zum Durchführen von Steckern Niedervoltverkabelung aufweisen, die in Richtung einer Längsachse des Halteelements im Abstand voneinander angeordnet sind. Die Stecker können beispielsweise Übergabestecker an der Batterieüberwachungseinheit sein. Je nach Art des Steckers können die Aussparungen unterschiedlich oder gegebenenfalls identisch ausgebildet sein. Beispielsweise können die Aussparungen sich in ihrer Größe und Form unterscheiden. Dadurch, dass die Verkabelungsplatte eine oder mehrere Aussparungen für die Stecker der Batterieüberwachungseinheit aufweist, kann die Batterieüberwachungseinheit schnell und zuverlässig verkabelt werden. Zudem ermöglichen die Aussparungen und die gegebenenfalls vorhandenen Nuten zum Verbinden der Aussparungen miteinander eine noch kompaktere Bauweise für die Batteriemodulanordnung, da die Kabel und Stecker an oder in der Verkabelungsplatte platzsparend montiert oder gehalten werden können.

Insbesondere können in die Verkabelungsplatte Bohrungen zum Fixieren von Kabelbindern eingebracht sein, um die Zugänglichkeit im Bereich der Stecker und den Halt der Kabel an den Steckern zu verbessern. Bei zwei oder mehr Aussparungen können eine oder mehrere Bohrungen zum Fixieren von Kabelbindern an einer zwischen zwei benachbarten Aussparungen ausgebildeten Nut eingebracht sein. An den Rändern der Aussparungen können darüber hinaus Durchgangsöffnungen mit die Durchgangsöffnung umgebenden Materialverjüngungen angeordnet sein. Die Durchgangsöffnungen durchdringen die Verkabelungsplatte von der Außenfläche bis zu der Auflagefläche. Weiter können die Durchgangsöffnungen jeweils paarweise an gegenüberliegenden Rändern einer Ausnehmung angeordnet sein. Die Durchgangsöffnungen ermöglichen in Verbindung mit den dazugehörigen Materialverjüngungen das Anbringen von Kabelbindern zur zusätzlichen Fixierung der Kabel im Bereich der Stecker. Ferner können an weiteren Positionen auf der Verkabelungsplatte Durchgangsöffnungen angeordnet sein, insbesondere an Positionen geringer Materialstärke, die einer formschlüssigen Fixierung der Kabel entgegenstehen.

Nach einer möglichen Weiterbildung kann die Batteriemodulanordnung ein drittes Batteriemodul aufweisen. Zwischen dem zweiten und dritten Batteriemodul kann ein weiteres Halteelement mit einer Batterieüberwachungseinheit angeordnet sein. Die Verkabelungsplatte kann an beiden Halteelementen formschlüssig abgestützt sein. Das dritte Batteriemodul kann im gleichen Abstand zu dem zweiten Batteriemodul angeordnet sein wie das zweite Batteriemodul von dem ersten Batteriemodul. Alternativ kann das dritte Batteriemodul auch neben dem ersten Batteriemodul angeordnet sein, sodass das weitere Halteelement zwischen dem ersten Batteriemodul und dem dritten Batteriemodul angeordnet ist. Die beiden Halteelemente können identisch ausgebildet sein.

Die Verkabelungsplatte kann auch an dem weiteren Halteelement formschlüssig abgestützt sein. Weiter kann die Verkabelungsplatte eine an die Länge der nebeneinander angeordneten Batteriemodule angepasste Länge aufweisen. Darüber hinaus kann die Verkabelungsplatte weitere Führungen für die mit der Batterieüberwachungseinheit an dem weiteren Halteelement verbundenen Kabel aufweisen.

Die Seitenelemente können weitere Kopplungsabschnitte zum formschlüssigen Verbinden mit dem weiteren Halteelement aufweisen. Weiter kann die Länge der Seitenelemente an die Länge der nebeneinander angeordneten Batteriemodule angepasst sein.

Es ist auch denkbar, dass mehr als drei Batteriemodule in Reihe entlang einer Längsachse der Batteriemodulanordnung angeordnet sind. In diesem Fall können die Verkabelungsplatte und die Seitenelemente entweder für zwei oder drei Batteriemodule ausgebildet sein. Entsprechend können auch zwei oder mehr Verkabelungsplatten und/oder zwei oder mehr Seitenelemente jeweils in Reihe entlang der Längsachse der Batteriemodulanordnung, insbesondere einer Längsachse des Wannengehäuses im Abstand voneinander angeordnet sein.

Gemäß einer möglichen Weiterbildung kann die Verkabelungsplatte in einem Randbereich ein Positionierelement zum Ausrichten einer Kabelschlaufe der Niedervoltverkabelung zu einer Öffnung eines oberhalb der Verkabelungsplatte angeordneten Deckels aufweisen. In diesem Zusammenhang wird unter einem Positionierelement ein Element oder Abschnitt der Verkabelungsplatte verstanden, der die Ausrichtung einer Kabelschlaufe ermöglicht. Das Positionierelement kann von einer Seitenfläche, insbesondere der zweiten Seitenfläche der Verkabelungsplatte vorstehen. Insbesondere kann das Positionierelement einen Halteabschnitt zum Halten der Kabelschlaufe aufweisen. Der Halteabschnitt kann derart ausgebildet sein, dass die Kabelschlaufe lösbar an dem Positionierelement befestigt ist. Insbesondere kann der Halteabschnitt eine Bohrung und einen mit der Bohrung verbundenen Einlass für die Kabelschlaufe aufweisen. Vorzugsweise kann das Positionierelement als ein von der Seitenfläche der Verkabelungsplatte vorstehender Steg mit einer Bohrung und einem sich bis zur Bohrung verjüngenden Schlitz ausgebildet sein, um die Kabelschlaufe in der Bohrung einzurasten und ein Zurückgleiten der Kabelschlaufe zu ermöglichen.

Das Positionierelement ist insbesondere im Bereich des Halteelements an der Verkabelungsplatte angeordnet. Insbesondere kann das Positionierelement parallel zu der Längsachse des Halteelements angeordnet sein. Die Bohrung des Halteabschnitts. kann im Vergleich zu dem Kabel der Kabelschlaufe überdimensioniert sein. Ferner kann das Positionierelement derart angeordnet sein, dass eine Bohrungsachse des Halteabschnitts die Längsachse des Halteelements schneidet. Das Positionierelement ermöglicht eine einfache und zuverlässige Ausrichtung der Kabelschlaufe der Niedervoltverkabelung zu einer Öffnung eines oberhalb der Verkabelungsplatte angeordneten Deckels, insbesondere eines Wannengehäuses der Batteriemodulanordnung. Durch das Positionierelement kann die Kabelschlaufe mittig unterhalb der Öffnung des Deckels positioniert werden, wodurch ein Scheuern des Kabelbaums der Niedervoltverkabelung in der Öffnung verhindert wird.

Nach einer möglichen Weiterbildung kann eine erste Modulebene die Batteriemodule, die Halteelemente, die Verkabelungsplatte und/oder das Seitenelement aufweisen. Eine zweite Modulebene kann auf der ersten Modulebene angeordnet sein. Die Batteriemodulanordnung, insbesondere die Modulebene, kann zusätzlich ein Wannengehäuse aufweisen. Die Modulebenen können identisch ausgebildet sein. Darüber hinaus können auch mehr als zwei Modulebenen übereinander angeordnet sein. Alternativ zu dem Deckel des Wannengehäuses kann die Öffnung zum Durchführen des Kabels der Kabelschlaufe auch an einem Boden des Wannengehäuses der zweiten Modulebene angeordnet sein.

Nach einer möglichen Ausgestaltung können das Halteelement, die Verkabelungsplatte und/oder das Seitenelement aus einem geschäumten Kunststoff hergestellt sein. Der geschäumte Kunststoff kann insbesondere expandiertes Polypropylen (EPP) sein. Geschäumte Kunststoffe und hiervon insbesondere EPP können mit hinreichenden Toleranzen hergestellt werden und weisen zudem eine gewisse Elastizität auf, die eine lokale Umformung mit geringem Kraftaufwand ermöglicht. Somit kann durch den Einsatz von geschäumten Kunststoffen eine leichte Montage des Halteelements zwischen den Batteriemodulen mit hoher Positionstreue über die Lebensdauer der Batteriemodulanordnung realisiert werden. Zudem weisen geschäumte Kunststoffe eine sehr niedrige Dichte auf, sodass deren Verwendung beispielsweise gegenüber metallischen Halteelementen einen signifikanten Gewichtsvorteil bedingt. Darüber hinaus weisen geschäumte Kunststoffe eine hohe Dämpfungskonstante auf, sodass die Halteelemente aus geschäumtem Kunststoff auf die Platine einwirkende Schwingungen dämpfen können.

Die Erfindung betrifft weiter ein Montageverfahren für die Batteriemodulanordnung mit den Schritten:
- Montieren eines ersten Batteriemoduls und eines zweiten Batteriemoduls in Reihe entlang einer Längsachse, sodass zwischen dem ersten Batteriemodul und dem zweiten Batteriemodul ein Spalt ausgebildet ist;
- Befestigen der Batterieüberwachungseinheit in einer Aufnahme eines Halteelements;
- Einschieben des Halteelements mit der Batterieüberwachungseinheit in den Spalt;
- Befestigen einer Verkabelungsplatte auf dem Halteelement, wobei die Verkabelungsplatte formschlüssig auf dem Halteelement abgestützt wird,
- Befestigen von Kabeln einer Niedervoltverkabelung für die Batterieüberwachungseinheit an Führungen der Verkabelungsplatte, wobei die Kabel in den Führungen gehalten werden.

Beim Montieren der Batteriemodulanordnung werden zunächst das erste Batteriemodul und das zweite Batteriemodul in Reihe entlang der Längsachse, beispielsweise der Längsachse des Wannengehäuses montiert, sodass zwischen dem ersten Batteriemodul und dem zweiten Batteriemodul ein Spalt zum Anordnen des Halteelements ausgebildet ist. Der Spalt kann zwischen der ersten Längsseite und der zweiten Längsseite ausgebildet sein. Das Halteelement kann zwischen einer Längsseite des ersten Batteriemoduls und einer Längsseite des zweiten Batteriemoduls eingeschoben werden. Die Batteriemodule können in einem Wannengehäuse angeordnet werden, wobei die Batteriemodule entlang einer Längsachse des Wannengehäuses montiert werden können.

Die Batterieüberwachungseinheit wird in der Aufnahme des Halteelements befestigt. Die Platine der Batterieüberwachungseinheit kann von einer Startposition zu einer Zwischenposition derart ausgehend von der Unterseite des Halteelements in die Aufnahme, insbesondere die Aussparung des Halteelements eingeschoben werden, dass die Anschlüsse der Platine von der Oberseite des Halteelements aus erreichbar sind. In der Zwischenposition kann eine Oberkante der Platine der Batterieüberwachungseinheit an der Seitenfläche des Halteelements anliegen. Zum Erreichen einer finalen Position kann die Platine um die Oberkante in Richtung auf die Seitenfläche des Halteelements verdreht werden, sodass der Formschluss zwischen den Vorsprüngen der Platine und den Vertiefungen des Halteelements ausgebildet ist. Zusätzlich können die Befestigungselemente in den Öffnungen der Vorsprünge angeordnet werden. Das Halteelement ist mit der Batterieüberwachungseinheit, insbesondere der Platine der Batterieüberwachungseinheit vormontiert, um zwischen den Batteriemodulen eingeschoben zu werden.

Das Halteelement wird mit der Batterieüberwachungseinheit, insbesondere der Platine der Batterieüberwachungseinheit in den Spalt zwischen den Batteriemodulen eingeschoben. Das Halteelement kann in dem Spalt kraftschlüssig zwischen die Batteriemodule geklemmt werden. Der Abstand zwischen den einander zugewandten Längsseiten der Batteriemodule kann kleiner als die Dicke des Halteelements sein, um das Halteelement kraftschlüssig einzuklemmen.

Die Verkabelungsplatte kann auf einer quer zu den Längsseiten verlaufenden Oberseite zumindest eines der Batteriemodule angeordnet werden. Die Verkabelungsplatte wird auf dem Halteelement befestigt und formschlüssig auf dem Halteelement abgestützt. Die Verkabelungsplatte kann auf dem Absatz des Halteelements formschlüssig abgestützt werden. Zusätzlich kann die Verkabelungsplatte mit dem Abstützelement an den Batteriemodulen, insbesondere den Oberseiten der Batteriemodule abgestützt werden. Zum Befestigen der Verkabelungsplatte an dem Halteelement wird die Verkabelungsplatte bezogen auf die Gebrauchslage von oberhalb der Oberseite des Halteelements und den Oberseiten der Batteriemodule in Richtung auf das Halteelement und/oder die Batteriemodule verstellt bis die Verkabelungsplatte an dem Absatz des Halteelements und/oder den Batteriemodulen, insbesondere den Oberseiten der Batteriemodule abgestützt ist.

Die Kabel der Niedervoltverkabelung für die Batterieüberwachungseinheit, werden an den Führungen der Verkabelungsplatte befestigt und formschlüssig in den Führungen gehalten. Die Stecker der Niedervoltverkabelung können durch die Aussparungen der Verkabelungsplatte hindurch an den dafür vorgesehenen Anschlüssen der Platine der Batterieüberwachungseinheit angeschlossen werden. Die Kabel können im Bereich der Stecker, insbesondere an den die Aussparungen verbindenden Nuten, zusätzlich an den Durchgangsöffnungen mittels Kabelbindern fixiert werden.

Vor dem Befestigen der Verkabelungsplatte kann mindestens ein Seitenelement an einer quer zu den Längsseiten und der Oberseite verlaufenden Querseite zumindest eines der Batteriemodule angeordnet werden und formschlüssig gegen das Halteelement abgestützt werden. Die Seitenelemente können jeweils über den Formschluss zwischen den Kopplungsabschnitten und den Formschlussabschnitten mit dem Halteelement formschlüssig verbunden werden. Zum Befestigen an dem Halteelement können die Seitenelemente insbesondere von Richtung der Oberseite des Halteelements in dem Wannengehäuse angeordnet werden, sodass die Kopplungsabschnitte der Seitenelement von oben auf die Formschlussabschnitte des Halteelements aufgeschoben werden. Die Seitenelemente können jeweils mit Hilfe der Rippen an den Außenseiten der Seitenelement kraftschlüssig mit dem Wannengehäuse verbunden werden.

Vor dem Befestigen des Seitenelements kann eine Stromschiene zum elektrischen Verbinden der Batteriemodule in einer auf einer von dem Halteelement abgewandten Außenseite angeordneten Aufnahme des Seitenelements eingelegt werden. An dem anderen der Seitenelemente kann eine weitere Stromschiene zum elektrischen Verbinden des zweiten Batteriemoduls mit einem möglichen dritten Batteriemodul angeordnet werden.

Die Stromschiene kann an Steckern mit den beiden Batteriemodulen verbunden und insbesondere jeweils an den Steckern mit den Batteriemodulen verschraubt werden.

Die Batteriemodule, die Halteelemente, die Verkabelungsplatte und/oder das Seitenelement können eine erste Modulebene bilden, wobei eine zweite Modulebene auf der ersten Modulebene angeordnet wird. Eine Kabelschlaufe der ersten Modulebene kann durch das Positionierelement mittig unterhalb der Öffnung des Bodens des Wannengehäuses der zweiten Modulebene ausgerichtet werden. Das Kabel der Kabelschlaufe kann beim Anordnen der zweiten Modulebene auf der ersten Modulebene durch die Öffnung geführt werden.

Ein Ausführungsbeispiel der Erfindung ist nachstehend mit Bezug auf die Zeichnungen erläutert. In den Zeichnungen zeigen in schematischer Darstellung:
- Figur 1: eine perspektivische Ansicht einer erfindungsgemäßen Batteriemodulanordnung,
- Figur 2: eine perspektivische Ansicht eines Halteelements und einer Batterieüberwachungseinheit der Batteriemodulanordnung von Figur 1,
- Figur 3: eine perspektivische Ansicht eines Seitenelements der Batteriemodulanordnung von Figur 1,
- Figur 4: in perspektivischer Ansicht einen Verfahrensschritt zum Anordnen von zwei Seitenelementen von Figur 3 an dem Halteelemente von Figur 2,
- Figur 5: eine perspektivische Ansicht einer Verkabelungsplatte der Batteriemodulanordnung von Figur 1
- Figur 6: in perspektivischer Ansicht einen Verfahrensschritt zum Anordnen der Verkabelungsplatte von Figur 5 an der Anordnung von Figur 4,
- Figur 7: eine Seitenansicht der Anordnung von Figur 6,
- Figur 8 - 13: Schritte eines Montageverfahrens für die Batteriemodulanordnung von Fig.1, und
- Figur 14: eine Draufsicht auf eine Verkabelungsplatte einer zweiten Ausführungsform der Batteriemodulanordnung von Figur 1 bis 13.

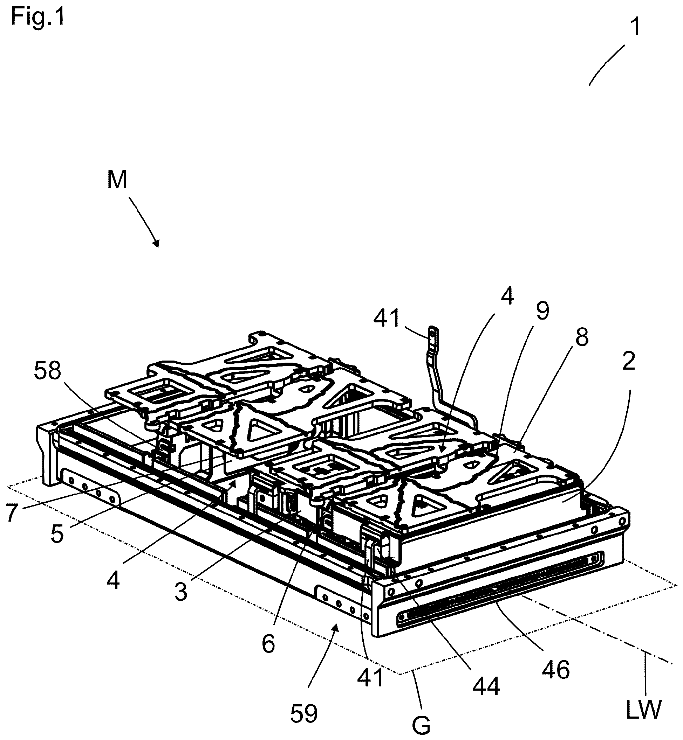

Figur 1 zeigt eine Batteriemodulanordnung 1 mit einem ersten Batteriemodul 2 und einem zweiten Batteriemodul 3. Die Batteriemodule 2, 3 weisen jeweils ein oder mehrere Batteriezellen auf.

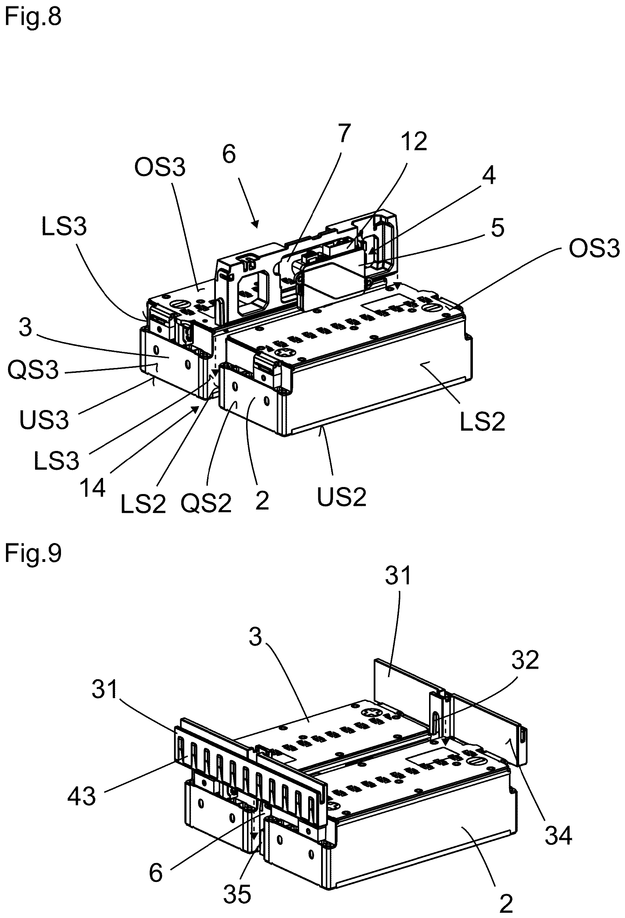

Die Batteriemodule 2,3 weisen jeweils zwei im Abstand voneinander angeordnete Längsseiten LS2, LS3 auf (vgl. Figur 8). Eine quer, hier beispielsweise senkrecht zu den Längsseiten LS2, LS3 angeordnete Oberseite OS2, OS3 ist im Abstand zu einer Unterseite US2, US3 angeordnet. Die Unterseite US2, US3 ist quer zu den Längsseiten LS2, LS3 und parallel zu der Oberseite OS2, OS3 angeordnet. Darüber hinaus weisen die Batteriemodule 2, 3 zwei im Abstand voneinander und quer, hier zum Beispiel senkrecht zu den Längsseiten LS2, LS3, der Oberseite OS2, OS3 und der Unterseite US2, US3 angeordnete Querseiten QS2, QS3 auf.

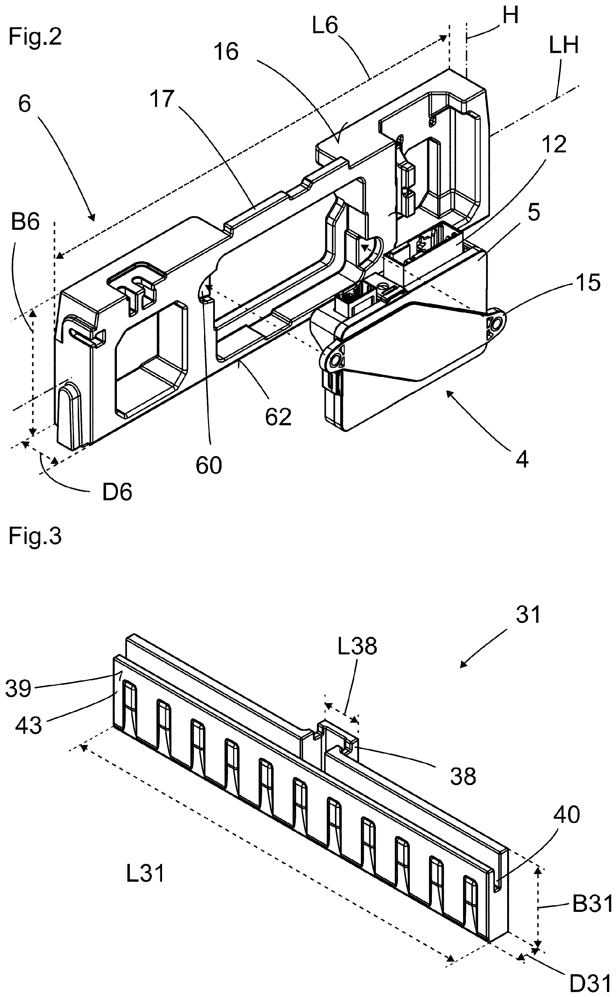

Die Batteriemodulanordnung 1 weist eine Batterieüberwachungseinheit 4 mit einer Platine 5 und ein Halteelement 6 mit einer Aufnahme 7 auf. Die Platine 5 der Batterieüberwachungseinheit 4 ist in der als Aussparung 7 ausgebildeten Aufnahme des Halteelements 6 angeordnet (vgl. Figur 2, 4 und 7). Das Halteelement 6 ist zwischen dem ersten Batteriemodul 2 und dem zweiten Batteriemodul 3 angeordnet. An dem Halteelement 6 ist eine Verkabelungsplatte 8 mit Führungen 9 zum Halten von Kabeln 10 einer Niedervoltverkabelung 11 für die Batterieüberwachungseinheit 4 formschlüssig abgestützt.

Das Halteelement 6, die Verkabelungsplatte 8 und Seitenelemente 31 bezeichnen jeweils flache Bauteile, d.h. dass ein solches Bauteil 6, 8, 31 eine Länge L6, L8, L31 und Breite B6, B8, B31 aufweist, die eine Erstreckung jeweils in Längen- und Breitenrichtung aufweisen, die einem Vielfachen der Dicke D6, D8, D31 des Bauteils entspricht. In diesem Zusammenhang wird unter der Längsrichtung eine Richtung entlang der Länge L6, L8, L31 des Bauteils 6, 8, 31, also in Richtung entlang einer Längsachse des Bauteils 6, 8, 31 und unter der Breitenrichtung eine Richtung entlang der Breite B6, B8, B31 des Bauteils 6, 8, 31 verstanden werden. Eine Querrichtung des Bauteils 6, 8, 31 beschreibt eine Richtung entlang der Dicke D6, D8, D31 des Bauteils 6, 8, 31.

An der Platine 5 der Batterieüberwachungseinheit 4 sind, wie in Figur 2 dargestellt, ein oder mehrere elektronische Bauteile, hier beispielsweise in Form von Anschlüssen 12 für Stecker 13 der Niedervoltverkabelung 11 für die Batterieüberwachungseinheit angeordnet. Die Batterieüberwachungseinheit 4 kann mit mehreren Sensoren, zum Beispiel Sensoren zur Überwachung der Temperatur, Sensoren zur Überwachung der Spannung und/oder Sensoren zur Überwachung anderer Parameter verbunden sein.

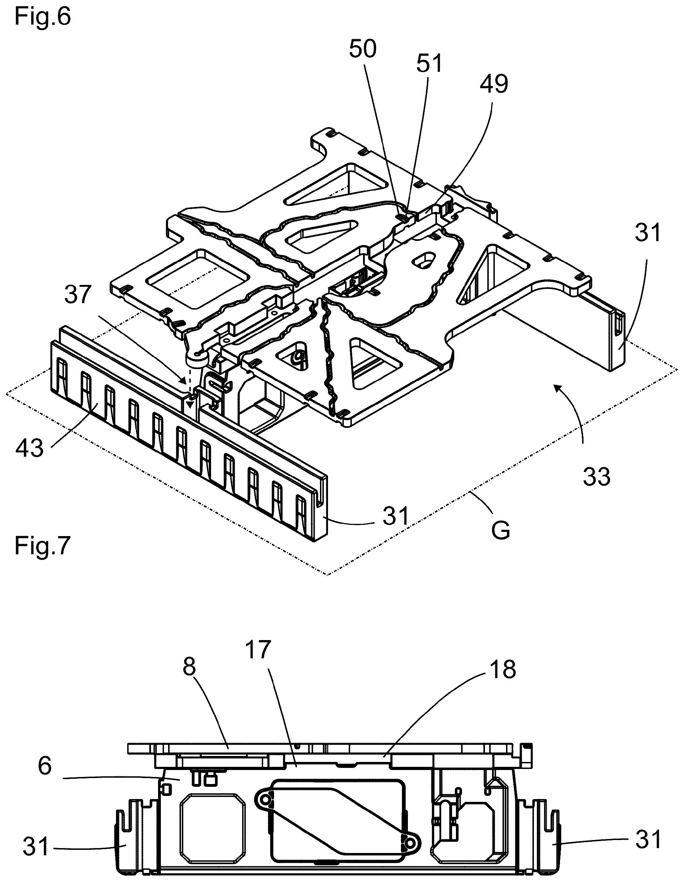

Die Batteriemodule 2,3 sind derart zueinander angeordnet, dass zwischen den Batteriemodulen 2,3 ein Spalt 14 ausgebildet ist. Das Halteelement 6 ist in dem Spalt 14 zwischen der Längsseite LS2 des ersten Batteriemoduls 2 und der Längsseite LS3 des zweiten Batteriemoduls 3 angeordnet. Die Platine 5 ist, wie in Figur 7 dargestellt, in einer Richtung vom ersten Batteriemodul 2 hin zu dem zweiten Batteriemodul 3 überstandsfrei in der Aussparung 7 angeordnet. Die Platine 5 ist form- und kraftschlüssig in der Aussparung 7 festgelegt. Hierzu weist die Platine 5 zwei, seitlich vorstehende Vorsprünge 15 auf. An der Aussparung 7 des Halteelements 6 sind seitliche Vertiefungen 60 für die Vorsprünge 15 ausgebildet. Die Vorsprünge 15 und/oder die Aussparungen 7 sind derart ausgebildet, dass ein Formschluss zwischen der Platine 5 der Batterieüberwachungseinheit 4 und dem Halteelement 6 in Längsrichtung und in Breitenrichtung des Halteelements 6 erzeugt ist.

Die Verkabelungsplatte ist auf den Oberseiten O2, O3 der beiden Batteriemodule 2,3 angeordnet. Das Halteelement 6 weist an einer der Verkabelungsplatte 8 zugewandten Oberseite 16 einen Absatz 17 zum formschlüssigen Abstützen der Verkabelungsplatte 8 auf dem Halteelement 6 auf. Der Absatz 17 steht in Breitenrichtung des Halteelements 6 von der Oberseite 16 vor. Die Verkabelungsplatte 8 weist eine Ausnehmung 18 zum Anordnen des Absatzes 17 auf. Der Absatz 17 ist derart in der Ausnehmung 18 angeordnet, dass ein Formschluss in Längsrichtung des Halteelements 6 ausgebildet ist. Das Halteelement 6 ist einstückig hergestellt worden, sodass der Absatz 17 einstückig an der Oberseite 16 des Halteelements 6 ausgebildet ist.

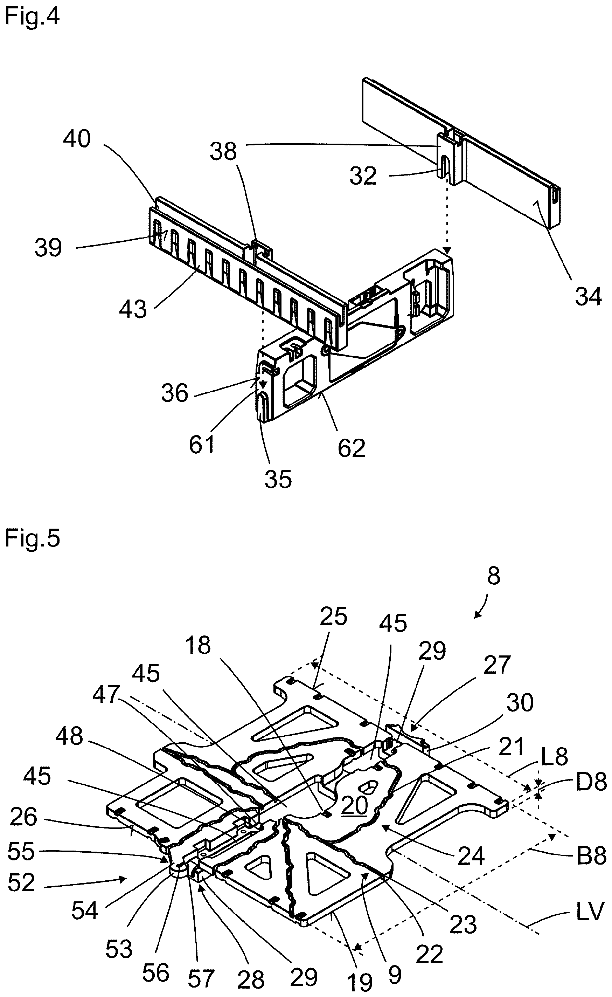

Die Führungen 9 der Verkabelungsplatte 8 sind, wie in Figur 5 dargestellt, derart ausgebildet, dass die Verkabelungsplatte 8 an einer dem Halteelement 6 und den Batteriemodulen 2, 3 zugewandten Auflagefläche 19 und einer von der Auflagefläche 19 abgewandten Außenfläche 20 zumindest entlang der Führungen 9 eben ist, also keine von der Auflagefläche 19 und der Außenfläche 20 vorstehenden Vorsprünge oder Erhebungen aufweist. Die Auflagefläche 19 und die Außenfläche 20 sind in Querrichtung der Verkabelungsplatte 8 im Abstand voneinander angeordnet. Dieser Abstand definiert die Dicke D8 der Verkabelungsplatte 8. Die Außenfläche 20 der Verkabelungsplatte 8 ist vollständig eben ausgebildet.

Die Führungen 9 sind darüber hinaus derart ausgebildet, dass die Kabel 10 der Niedervoltverkabelung 11 formschlüssig festgehalten sind. Zwischen den Führungen 9 und den Kabeln 10 ist ein Formschluss in Querrichtung der Verkabelungsplatte 8 ausgebildet. Die Führungen der Verkabelungsplatte 8 sind jeweils als Nuten 9 der Außenfläche 20 der Verkabelungsplatte 8 ausgebildet. Entlang der Nuten 9 sind mehrere im Abstand voneinander angeordnete Rastelemente 21 zum formschlüssigen Halten der Kabel 10 angeordnet, die über die Nuten 9 vorstehen. Die Nuten 9 sind ein freier Bereich an der Außenfläche 20 der Verkabelungsplatte 8, der zum Führen der Kabel 10 durch einen Boden 22 und zwei Seitenwände 23 begrenzt ist. Die Nuten 9 sind zumindest abschnittsweise wellenförmig ausgebildet. Die Rastelemente sind jeweils als von den Seitenwänden 23 der Nut 9 vorstehende Bögen 21 einer Welle 24 ausgebildet.

Die Verkabelungsplatte 8 weist zwei jeweils an einer Seitenfläche 25, 26 der Verkabelungsplatte 8 angeordnete Abstützelemente 27, 28 zum Abstützen auf den beiden Batteriemodulen 2, 3auf. Ein erstes Abstützelement 27 ist in Richtung entlang der Längsachse LH des Halteelements 6 an einer ersten Seitenfläche 25 der Seitenflächen 25, 26 ausgebildet. In Draufsicht auf die Verkabelungsplatte 8 ist das erste Abstützelement 27 zu einer Längsachse LH des Halteelements 6 achsensymmetrisch ausgebildet. Das erste Abstützelement 27 weist einen von der ersten Seitenfläche 25 in Richtung entlang der Längsachse LH des Halteelements 6 und quer zu einer Längsachse LV der Verkabelungsplatte 8 vorstehenden Steg 29 auf. Zusätzlich weist das erste Abstützelement 27 zwei quer zu der Längsachse LH des Halteelements 6 von dem Steg 29 seitlich vorstehende Abstützabschnitte 30auf. An einer der ersten Seitenfläche 25 gegenüberliegenden zweiten Seitenfläche 26 ist ein zweites Abstützelement 28 ausgebildet. Die Abstützelemente 27, 28 sind unterschiedlich ausgebildet. Das zweite Abstützelement 28 weist nur einen Steg 29 auf.

Das Halteelement 6 ist an zwei, wie in Figur 3 dargestellten, Seitenelementen 31 seitlich abgestützt. Die Seitenelemente 31 weisen jeweils einen Kopplungsabschnitt 32 zum formschlüssigen Verbinden mit dem Halteelement 6 auf. Die Seitenelemente 31 und das Halteelement 6 bilden in Draufsicht auf die Verkabelungsplatte 8 und in Querrichtung des ersten Halteelements 6 ein H-Profil 33 aus (vgl. Figur 4).

Die Seitenelemente 31 sind identisch ausgebildet und in Draufsicht auf die Verkabelungsplatte 8 jeweils achsensymmetrisch zu der Längsachse LV der Verkabelungsplatte 8 angeordnet. Die Kopplungsabschnitte 32 der Seitenelemente 31 sind jeweils an einer dem Halteelement 6 zugewandten Innenseite 34 angeordnet. Das Halteelement 6 weist zwei jeweils einem der Seitenelemente 31 zugeordnete Formschlussabschnitte 35 auf, die an zwei gegenüberliegenden Stirnflächen 36 des Halteelements 6 angeordnet sind.

Die Kopplungsabschnitte 32 und die Formschlussabschnitte 35 sind jeweils zu einer senkrecht zu der Längsachse LH des Halteelements angeordneten Hauptachse H achsensymmetrisch ausgebildet. Ein Formschluss aus einem Kopplungsabschnitt 32 und einem Formschlussabschnitt 35 ist durch eine Feder-Nut-Verbindung 37 erzeugt. Die Kopplungsabschnitte sind jeweils als Feder 32 und die Formschlussabschnitte sind jeweils als Nut 35 ausgebildet.

Die Seitenelemente 31 weisen, wie in Figur 3 gezeigt, jeweils im Bereich der Kopplungsabschnitte 32 eine in Richtung auf das Halteelement 6 vorstehende Verstärkungsrippe 38 auf. Die Verstärkungsrippen 38 der Seitenelemente 31 weisen in Draufsicht auf die Verkabelungsplatte 8 eine Länge L38 auf, die der Dicke D6 des Halteelements 6 entspricht.

Darüber hinaus weisen die Seitenelemente 31 auf einer von dem Halteelement 6 und der Innenseite 34 der Seitenelemente 31 abgewandten Außenseite 39 eine Aufnahme in Form einer Nut 40 zum Einlegen einer Stromschiene 41 für eine Hochvoltverbindung 42 der Batteriemodule 2,3 auf. Ferner weisen die Seitenelemente 31 jeweils an der Außenseite 39 mehrere in Richtung der Längsachse LV der Verstärkungsplatte 8 und in Richtung einer Längsachse LS des Seitenelements 31 intervallartig im Abstand voneinander angeordnete Rippen 43 auf. Die Nut 40 der Seitenelemente 31 ist zwischen der Innenseite 34 und der Außenseite 39 ausgebildet. Die Stromschiene 41 für die Hochvoltverbindung 42 ist in der Nut 40 angeordnet und jeweils über Stecker 44 mit den Batteriemodulen 2,3 verbunden. Zusätzlich kann die Stromschiene 41 an den Steckern 44 mit den Batteriemodulen 2,3 verschraubt sein.

Bezogen auf die, insbesondere in Figur 1, 6 und 13 gezeigte, Gebrauchslage der Batteriemodulanordnung 1 ist die Verkabelungsplatte 8 auf der Oberseite 16 des Halteelements 6 angeordnet. Die Seitenelemente 31 sind jeweils an Querseiten 61 des Halteelements 6 an den Stirnflächen 36 des Halteelements 6 angeordnet. In der Gebrauchslage sind eine Unterseite 62 des Halteelements 6 und die Oberseite 16 des Halteelements 6 parallel zu einer Grundebene G der Batteriemodulanordnung 1 angeordnet. Die Verkabelungsplatte 8 liegt derart auf der Oberseite 16 des Halteelements 6 auf, dass die Auflagefläche 19 und die Außenfläche 20 der Verkabelungsplatte 8 parallel zu der Grundebene G angeordnet sind. Die Seitenelemente 31 sind derart an der Querseite 61 des Halteelements 6 angeordnet, dass die Innenseite 34 und die Außenseite 39 der Seitenelemente 31 jeweils quer, hier beispielsweise senkrecht zu der Grundebene G angeordnet sind. Das Halteelement 6 ist in Richtung der Längsachse LH des Halteelements 6 zwischen den Seitenelementen 31 angeordnet.

Die Verkabelungsplatte 8 weist drei in Richtung der Längsachse LH des Halteelements 6 im Abstand voneinander angeordnete Aussparungen 45 zum Aufnehmen der Steckern 13 der Niedervoltverkabelung 11 auf. Die Stecker 13 sind unterschiedliche Übergabestecker 13 an der Batterieüberwachungseinheit 4. Je nach Art des Steckers 13 sind die Aussparungen 45 unterschiedlich ausgebildet und unterscheiden sich in ihrer Größe und Form. Zwischen zwei benachbarten Aussparungen 45 sind jeweils Nuten 47 mit einer oder mehreren Bohrungen 48 zum Fixieren von Kabelbindern eingebracht.

An Rändern 49 der Aussparungen 45 sind Durchgangsöffnungen 50 mit diese jeweils umgebenden Materialverjüngungen 51 angeordnet. Die Durchgangsöffnungen 50 durchdringen die Verkabelungsplatte 8 von der Außenfläche 20 bis zu der Auflagefläche 19. Weiter sind die Durchgangsöffnungen 50 jeweils paarweise an gegenüberliegenden Rändern 49 einer Aussparung 45 angeordnet.

Die Verkabelungsplatte 8 weist in einem Randbereich 52 ein Positionierelement 53 zum Ausrichten einer Kabelschlaufe zu einer Öffnung eines oberhalb der Verkabelungsplatte 8 angeordneten Deckels auf. Das Positionierelement 53 ist hier beispielsweise als ein von der zweiten Seitenfläche 26 der Verkabelungsplatte 8 vorstehender Steg 54 mit einem Halteabschnitt 55 ausgebildet, der eine Bohrung 56 und einen sich bis zur Bohrung 56 verjüngenden Schlitz 57 aufweist. Das Positionierelement 53 ist parallel zu der Längsachse LH des Halteelements 6 an der Verkabelungsplatte 8 angeordnet.

Die Batteriemodulanordnung 1 kann, wie in Figur 1 angedeutet, ein drittes und ein viertes Batteriemodul aufweisen, die nicht dargestellt sind. In diesem Fall kann die Batteriemodulanordnung 1 eine zweite Verkabelungsplatte 8 und ein zwischen dem dritten und vierten Batteriemodulen angeordnetes weiteres Halteelement 58 aufweisen. Zudem können weitere Seitenelemente 31 vorgesehen sein. Die Halteelemente 6, 58 die Verkabelungsplatte 8 und/oder die Seitenelemente 31 sind aus einem geschäumten Kunststoff, hier zum Beispiel expandiertes Polypropylen (EPP) hergestellt.

Die Batteriemodule 2,3, die Halteelemente 6, 58, die Verkabelungsplatte 8 und/oder die Seitenelemente 31 können eine erste Modulebene M bilden. Die Modulebene M der Batteriemodulanordnung 1 kann zusätzlich, wie in Figur 1 dargestellt, ein Wannengehäuse 59 aufweisen. Auf der ersten Modulebene M kann eine nicht dargestellte zweite Modulebene angeordnet sein. Die Modulebenen M können identisch ausgebildet sein.

Die Figuren 8 bis 13 zeigen Schritte eines Montageverfahrens für die Batteriemodulanordnung 1. Zunächst werden, wie in Figur 8 dargestellt, das erste Batteriemodul 2 und das zweite Batteriemodul 3 in dem Wannengehäuse 59 in Reihe entlang einer Längsachse LW des Wannengehäuses 59 montiert, sodass zwischen dem ersten Batteriemodul 2 und dem zweiten Batteriemodul 3 der Spalt 14 zum Anordnen des Halteelements 6 ausgebildet ist. Das Wannengehäuse 59 ist übersichtshalber in Figur 8 bis 13 nicht dargestellt und nur beispielhaft in Figur 1 gezeigt.

Die Batterieüberwachungseinheit 4 wird in der Aussparung 7 des Halteelements 6 befestigt. Hierzu wird die Platine 5 der Batterieüberwachungseinheit 4 in die Aussparung 7 des Halteelements 6 eingeschoben und der Formschluss zwischen den Vorsprüngen 15 der Platine 5 und den Vertiefungen 60 des Halteelements 6 ausgebildet. Das Halteelement 6 wird mit der Platine 5 der Batterieüberwachungseinheit 4 vormontiert. Anschließend wird das Halteelement 6 mit der Batterieüberwachungseinheit 4 in den Spalt 14 zwischen den Batteriemodulen 2,3 eingeschoben und in dem Spalt 14 kraftschlüssig zwischen die Batteriemodule 2,3 geklemmt.

An dem Halteelement 6 werden, wie in Figur 9 dargestellt, die zwei Seitenelemente 31 befestigt. Dabei werden die Seitenelemente 31 über den Formschluss zwischen den Kopplungsabschnitten 32 und den Formschlussabschnitten 35 formschlüssig mit dem Halteelement 6 verbunden. Hierzu werden die Seitenelemente 31 von Richtung der Oberseite 16 des Halteelements 6 derart in dem Wannengehäuse 59 angeordnet, dass die Kopplungsabschnitte 32 der Seitenelemente 31 von oben auf die Formschlussabschnitte 35 des Halteelements 6 aufgeschoben werden. Darüber hinaus werden die Seitenelemente 31 jeweils mit Hilfe der Rippen 43 an den Außenseiten 39 der Seitenelemente 31 kraftschlüssig mit dem Wannengehäuse 59 verbunden.

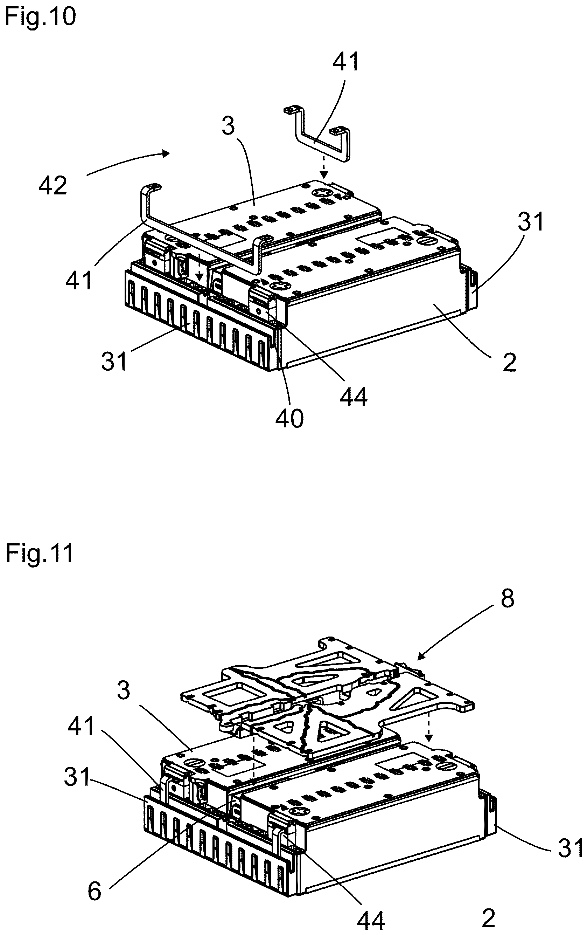

Zum elektrischen Verbinden des ersten Batteriemoduls 2 mit dem zweiten Batteriemodul 3 wird, wie in Figur 10 dargestellt, die Stromschiene 41 in der Aufnahme 40 eines der Seitenelemente 31 angeordnet. An dem anderen der Seitenelemente 31 wird eine weitere Stromschiene 41 zum in Reihe Schalten des zweiten Batteriemoduls 2 mit dem nicht dargestellten dritten Batteriemodul angeordnet. Die Stromschienen 41 werden jeweils an den Steckern 44 mit den beiden Batteriemodulen 2, 3 verbunden und gegebenenfalls jeweils an den Steckern 44 mit den Batteriemodulen 2,3 verschraubt.

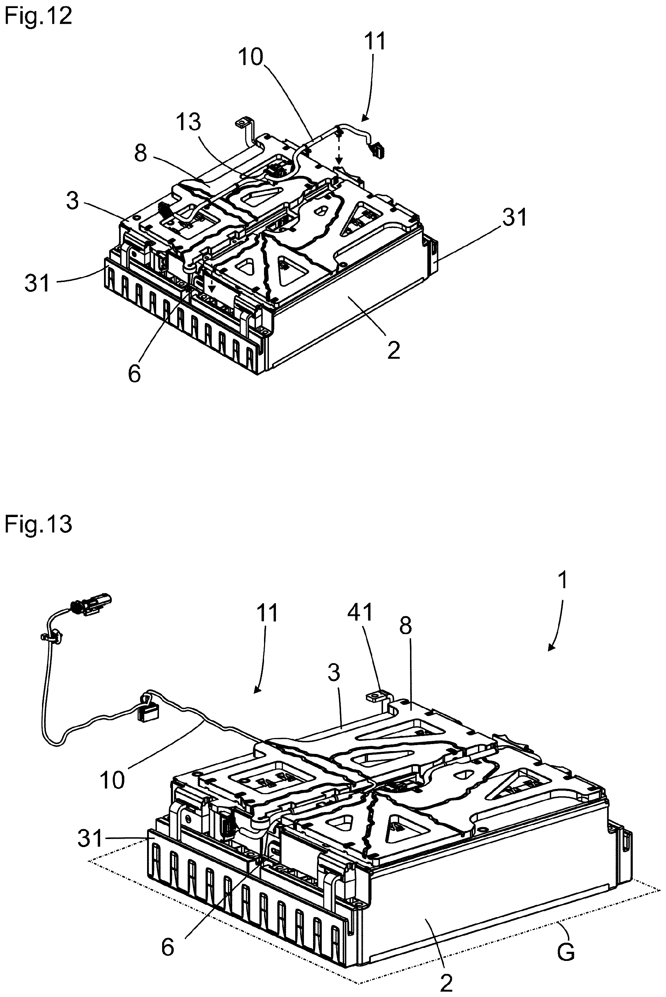

Danach wird die Verkabelungsplatte 8, wie in Figur 11 gezeigt, auf dem Halteelement 6 befestigt. Hierbei wird die Verkabelungsplatte 8 auf dem Absatz 17 des Halteelements 6 formschlüssig abgestützt. Zusätzlich wird die Verkabelungsplatte 8 mit den Abstützelementen 27, 28 an Oberseiten OS2, OS3 der Batteriemodule 2, 3 abgestützt. Zum Befestigen der Verkabelungsplatte 8 an dem Halteelement 6 wird die Verkabelungsplatte 8 bezogen auf die in Figur 1 und 13 gezeigte Gebrauchslage der Batteriemodulanordnung 1 von oberhalb der Oberseite 16 des Halteelements 6 in Richtung auf das Halteelement 6 und/oder die Batteriemodule 2, 3 verstellt bis die Verkabelungsplatte 8 an dem Absatz 17 des Halteelements 6 und/oder den Oberseiten OS2, OS3 der Batteriemodule 2,3 abgestützt ist.

Die Kabel 10 der Niedervoltverkabelung 11 werden, wie in Figur 12 und 13 dargestellt, an den Nuten 9 der Verkabelungsplatte 8 befestigt und formschlüssig in den Nuten 9 gehalten. Die Stecker 13 der Niedervoltverkabelung 11 werden durch die Aussparungen 45 der Verkabelungsplatte 8 hindurch an den dafür vorgesehenen Anschlüssen 12 der Platine 5 der Batterieüberwachungseinheit 4 angeschlossen. Die Kabel 10 können im Bereich der Stecker 13 an den die Aussparungen 45 miteinander verbindenden Nuten 47 in den Bohrungen 48 und an den Durchgangsöffnungen 50 mittels nicht dargestellten Kabelbindern fixiert werden.

Eine Kabelschlaufe der ersten Modulebene M kann durch das Positionierelement 53 mittig unterhalb der Öffnung eines Bodens 46 des Wannengehäuses 59 einer zweiten Modulebene ausgerichtet werden. Das Kabel der Kabelschlaufe kann beim Anordnen der zweiten Modulebene auf der ersten Modulebene durch die Öffnung geführt werden.

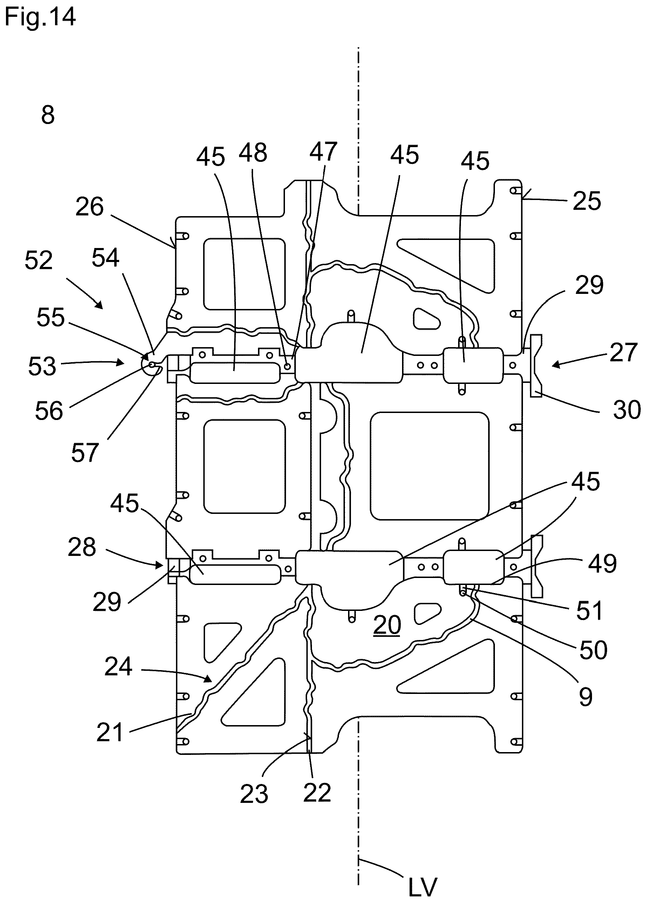

Figur 14 zeigt eine Verkabelungsplatte 8 einer zweiten Ausführungsform der in den Figuren 1 bis 13 dargestellten Batteriemodulanordnung 1. Für gleiche Bauteile oder Elemente werden gleiche Bezugszeichen verwendet. Die in Figur 14 dargestellte Verkabelungsplatte 8 unterscheidet sich von der in den Figuren 1 bis 13 gezeigten Verkabelungsplatte 8 dadurch, dass die in Figur 14 gezeigte Verkabelungsplatte 8 für drei Batteriemodule ausgebildet ist. Neben dem zweiten Batteriemodul 3 ist ein drittes Batteriemodul angeordnet. Zwischen dem zweiten Batteriemodul 2 und dem nicht dargestellten dritten Batteriemodul ist ein weiteres Halteelement 58 mit einer Batterieüberwachungseinheit 4 angeordnet. Die Verkabelungsplatte 8 weist Aussparungen 45 zum Durchführen von Steckern 45 der Niedervoltverkabelung 11 auf und ist auch an dem weiteren Halteelement 58 formschlüssig abgestützt. Zudem weist die Verkabelungsplatte 8 eine an die Länge der nebeneinander angeordneten Batteriemodule angepasste Länge L8 auf. Darüber hinaus weist die Verkabelungsplatte 8 weitere Nuten 9 für die mit der Batterieüberwachungseinheit 4 an dem weiteren Halteelement 58 verbundenen Kabel auf. Die Seitenelemente 31 der zweiten Ausführungsform der Batteriemodulanordnung 1 weisen weitere Kopplungsabschnitte 32 zum formschlüssigen Verbinden mit dem weiteren Halteelement 58 und eine an die Länge der nebeneinander angeordneten Batteriemodule angepasste Länge L31 auf.

Alle in Verbindung mit einzelnen Ausführungsformen der Erfindung erläuterten Merkmale können in unterschiedlicher Kombination für die Batteriemodulanordnung 1 oder das Montageverfahren für die Batteriemodulanordnung 1 vorgesehen sein, um deren vorteilhafte Wirkungen zu realisieren, auch wenn diese zu unterschiedlichen Ausführungsformen beschrieben worden sind. Beispielsweise kann die Batteriemodulanordnung 1 sechs Batteriemodule 2, 3 und drei zwischen den Batteriemodulen 2, 3 angeordnete Halteelemente 8, 58 aufweisen, wobei an den Halteelementen 6, 58 zwei der in Figur 14 gezeigten Verkabelungsplatten 8 formschlüssig abgestützt sind.

### Bezugszeichenliste

- 1: Batteriemodulanordnung
- 2: erstes Batteriemodul
- 3: zweites Batteriemodul
- 4: Batterieüberwachungseinheit
- 5: Platine
- 6: Halteelement
- 7: Aufnahme (Aussparung)
- 8: Verkabelungsplatte
- 9: Führung (Nut)
- 10: Kabel
- 11: Niedervoltverkabelung
- 12: elektronisches Bauteil (Anschluss)
- 13: Stecker der Niedervoltverkabelung (Übergabestecker)
- 14: Spalt
- 15: Vorsprung der Platine
- 16: Oberseite des Halteelements
- 17: Absatz des ersten Halteelements
- 18: Ausnehmung der Verkabelungsplatte
- 19: Auflagefläche
- 20: Außenfläche
- 21: Rastelement (Bogen)
- 22: Boden der Nut
- 23: Seitenwand der Nut
- 24: Welle
- 25: erste Seitenfläche der Verkabelungsplatte
- 26: zweite Seitenfläche der Verkabelungsplatte
- 27: erstes Abstützelement
- 28: zweites Abstützelement
- 29: Steg
- 30: Abstützabschnitt
- 31: Seitenelement
- 32: Kopplungsabschnitt (Nut)
- 33: H-Profil
- 34: Innenseite des Seitenelements
- 35: Formschlussabschnitt (Feder)
- 36: Stirnfläche des Halteelements
- 37: Feder-Nut-Verbindung
- 38: Verstärkungsrippe
- 39: Außenseite des Seitenelements
- 40: Aufnahme (Nut) des Seitenelements
- 41: Stromschiene
- 42: Hochvoltverbindung
- 43: Rippe
- 44: Stecker der Stromschiene
- 45: Aussparungen der Verkabelungsplatte
- 46: Boden des Wannengehäuses
- 47: Nut für Kabelbinder
- 48: Bohrung für Kabelbinder
- 49: Rand der Aussparung
- 50: Durchgangsöffnung
- 51: Materialverjüngung
- 52: Randbereich der Verkabelungsplatte
- 53: Positionierelement
- 54: Steg des Positionierelements
- 55: Halteabschnitt des Positionierelements
- 56: Bohrung des Halteabschnitts
- 57: Schlitz des Halteabschnitts
- 58: weiteres Halteelement
- 59: Wannengehäuse
- 60: Vertiefung
- 61: Querseite des Halteelements
- 62: Unterseite des Halteelements
- B6: Breite des Halteelements
- B8: Breite der Verkabelungsplatte
- B31: Breite des Seitenelements
- D6: Dicke des Halteelements
- D8: Dicke der Verkabelungsplatte
- D31: Dicke des Seitenelements
- G: Grundebene der Batteriemodulanordnung
- H: Hauptachse des Halteelements
- L6: Länge des Halteelements
- L8: Länge der Verkabelungsplatte
- L31: Länge des Seitenelements
- L38: Länge der Verstärkungsrippe
- LH: Längsachse des Halteelements
- LS2: Längsseite des ersten Batteriemoduls
- LS3: Längsseite des zweiten Batteriemoduls
- LV: Längsachse der Verkabelungsplatte
- LW: Längsachse des Wannengehäuses
- M: erste Modulebene
- OS2: Oberseite des ersten Batteriemoduls
- OS3: Oberseite des zweiten Batteriemoduls
- QS2: Querseite des ersten Batteriemoduls
- QS3: Querseite des zweiten Batteriemoduls
- US2: Unterseite des ersten Batteriemoduls
- US3: Unterseite des zweiten Batteriemoduls

## Patentansprüche

1. Batteriemodulanordnung mit
- einem ersten Batteriemodul (2) und einem zweiten Batteriemodul (3), die jeweils ein oder mehrere Batteriezellen umfassen,
- einer Batterieüberwachungseinheit (4),
- einem Halteelement (6) mit einer Aufnahme (7), in der die Batterieüberwachungseinheit (4) angeordnet ist,
- wobei das Halteelement (6) zwischen dem ersten Batteriemodul (2) und dem zweiten Batteriemodul (3) angeordnet ist,
- einer an dem Halteelement (6) formschlüssig abgestützten Verkabelungsplatte (8) mit Führungen (9) zum Halten von Kabeln (10) einer Niedervoltverkabelung (11) für die Batterieüberwachungseinheit (4).

2. Batteriemodulanordnung nach Anspruch 1,
**dadurch gekennzeichnet,**
**dass** das Halteelement (6) zwischen einer Längsseite (LS2) des ersten Batteriemoduls (2) und einer Längsseite (LS3) des zweiten Batteriemoduls (3) angeordnet ist und
**dass** die Verkabelungsplatte (8) auf einer quer zu den Längsseiten (LS2, LS3) verlaufenden Oberseite (OS2, OS3) zumindest eines der Batteriemodule (2, 3) angeordnet ist.

3. Batteriemodulanordnung nach Anspruch 2,
**dadurch gekennzeichnet,**
**dass** mindestens ein Seitenelement (31) an einer quer zu den Längsseiten (LS2, LS3) und der Oberseite (OS2, OS3) verlaufenden Querseite (QS2, QS3) zumindest eines der Batteriemodule (2, 3) angeordnet ist und formschlüssig gegen das Halteelement (6) abgestützt ist.

4. Batteriemodulanordnung nach Anspruch 3,
**dadurch gekennzeichnet,**
**dass** das mindestens eine Seitenelement (31) auf einer von dem Halteelement (6) abgewandten Außenseite (39) mindestens eine Aufnahme (40) zum Einlegen einer Stromschiene (41) für eine Hochvoltverbindung (42) zwischen den Batteriemodulen (2, 3) aufweist.

5. Batteriemodulanordnung nach einem der Ansprüche 1 bis 4,
**dadurch gekennzeichnet,**
**dass** die Führungen der Verkabelungsplatte (8) jeweils als Nuten (9) der Verkabelungsplatte (8) ausgebildet sind, wobei entlang der Nuten (9) mehrere im Abstand voneinander angeordnete Rastelemente (21) zum formschlüssigen Halten der Kabel (10) angeordnet sind, die über die Nuten (9) vorstehen.

6. Batteriemodulanordnung nach einem der Ansprüche 1 bis 5,
**dadurch gekennzeichnet,**
**dass** die Verkabelungsplatte (8) mindestens eine Aussparung (45) zur Aufnahme eines Steckers (13) der Niedervoltverkabelung (11) aufweist.

7. Batteriemodulanordnung nach einem der Ansprüche 1 bis 6,
**dadurch gekennzeichnet, dass**
in die Verkabelungsplatte (8) Bohrungen (48) zum Fixieren von Kabelbindern eingebracht sind.

8. Batteriemodulanordnung nach einem der Ansprüche 1 bis 7,
**gekennzeichnet durch** ein drittes Batteriemodul, wobei zwischen dem zweiten und dritten Batteriemodul ein weiteres Halteelement (58) mit einer Batterieüberwachungseinheit (4) angeordnet ist und die Verkabelungsplatte (8) an beiden Halteelementen (6, 58) formschlüssig abgestützt ist.

9. Batteriemodulanordnung nach einem der Ansprüche 1 bis 8
**dadurch gekennzeichnet,**
**dass** die Verkabelungsplatte (8) in einem Randbereich (52) ein Positionierelement (53) zum Ausrichten einer Kabelschlaufe der Niedervoltverkabelung (11) zu einer Öffnung eines oberhalb der Verkabelungsplatte (8) angeordneten Deckels aufweist.

10. Batteriemodulanordnung nach einem der Ansprüche 1 bis 9,
**dadurch gekennzeichnet,**
**dass** eine erste Modulebene (M) die Batteriemodule (2,3), die Halteelemente (6, 58), die Verkabelungsplatte (8) und/oder das Seitenelemente (31) aufweist, wobei eine zweite Modulebene auf der ersten Modulebene (M) angeordnet ist.

11. Batteriemodulanordnung nach einem der Ansprüche 1 bis 10,
**dadurch gekennzeichnet,**
**dass** die Halteelemente (6, 58), die Verkabelungsplatte (8) und/oder das Seitenelement (31) aus einem geschäumten Kunststoff, insbesondere aus expandiertem Polypropylen (EPP), hergestellt sind.

12. Montageverfahren für eine Batteriemodulanordnung mit den Schritten:
- Montieren eines ersten Batteriemoduls (2) und eines zweiten Batteriemoduls (3) in Reihe entlang einer Längsachse (LW), sodass zwischen dem ersten Batteriemodul (2) und dem zweiten Batteriemodul (3) ein Spalt (14) ausgebildet ist;
- Befestigen der Batterieüberwachungseinheit (4) in einer Aufnahme (7) eines Halteelements (6);
- Einschieben des Halteelements (6) mit der Batterieüberwachungseinheit (4) in den Spalt (14);
- Befestigen einer Verkabelungsplatte (8) auf dem Halteelement (6), wobei die Verkabelungsplatte (8) formschlüssig auf dem Halteelement (6) abgestützt wird,
- Befestigen von Kabeln (10) einer Niedervoltverkabelung (11) für die Batterieüberwachungseinheit (4) an Führungen (9) der Verkabelungsplatte (8), wobei die Kabel (10) in den Führungen (9) gehalten werden.

13. Montageverfahren nach Anspruch 12,
**dadurch gekennzeichnet,**
**dass** Halteelement (6) zwischen eine Längsseite (LS1) des ersten Batteriemoduls (2) und eine Längsseite (LS2) des zweiten Batteriemoduls (3) eingeschoben wird und
**dass** die Verkabelungsplatte (8) auf einer quer zu den Längsseiten (LS1, LS2) verlaufenden Oberseite (63) zumindest eines der Batteriemodule (2, 3) angeordnet wird.

14. Montageverfahren nach Anspruch 12 oder 13,
**dadurch gekennzeichnet,**
**dass** vor dem Befestigen der Verkabelungsplatte (8) mindestens ein Seitenelement (31) an einer quer zu den Längsseiten (LS1, LS2) und der Oberseite (63) verlaufenden Querseite (64) zumindest eines der Batteriemodule angeordnet wird und formschlüssig gegen das Halteelement (6) abgestützt wird.

15. Montageverfahren nach einem der Ansprüche 12 bis 14,
**dadurch gekennzeichnet,**
**dass** vor dem Befestigen des Seitenelements (31) eine Stromschiene (41) zum elektrischen Verbinden der Batteriemodule (2,3) in einer auf einer von dem Halteelement (6) abgewandten Außenseite (39) angeordneten Aufnahme (40) des Seitenelements (31) eingelegt wird.
